# EUROPÄISCHE PATENTSCHRIFT

(11) **EP 1 075 645 B1**
(45) Veröffentlichungstag und Bekanntmachung des Hinweises auf die Patenterteilung: **30.01.2002**
(21) Anmeldenummer: 99915752.2
(22) Anmeldetag: 09.04.1999
(51) Int. Cl.: G01G 19/44, G01G 21/28

(54) **ELEKTRONISCHE WAAGE FÜR DEN MOBILEN EINSATZ**
ELECTRONIC SCALE FOR MOBILE USE
BALANCE ELECTRONIQUE DESTINEE A UN USAGE MOBILE

(30) Priorität: 29.04.1998 DE 19819135
(43) Veröffentlichungstag der Anmeldung: 14.02.2001
(73) Patentinhaber: Bizerba GmbH & Co. KG, D-72336 Balingen (DE)
(72) Erfinder: WEINUNDBROT, Hubert, D-72379 Hechingen-Stein (DE)
(74) Vertreter: Hoeger, Stellrecht & Partner
(86) Internationale Anmeldenummer: EP9902408
(87) Internationale Veröffentlichungsnummer: WO9956095

(56) Entgegenhaltungen:
- DE-A- 3 642 970
- DE-U- 29 722 105
- US-A- 4 765 421
- US-A- 5 414 225

## Beschreibung

Die Erfindung betrifft eine elektronische Waage für den mobilen Einsatz, welche in eine kleinere, leichter transportierbare Einheit zusammenklappbar ist.

Waagen für den mobilen Einsatz werden beispielsweise in mobilen Verkaufsständen auf Rädern oder in Marktständen oder als transportierbare Personenwaagen verwendet. Dabei ist es wünschenswert, daß die Waagen für den Transport von Aufstellort zu Aufstellort möglichst klein und kompakt sind.

Aus der DE 36 42 970 A1 ist eine zusammenklappbare Personenwaage bekannt, die zwei Auswägeeinrichtungen beinhaltet, die über ein Scharnier zusammenklappbar miteinander verbunden sind und eine Kabelverbindung aufweisen. Jede der Auswägeeinrichtungen weist ein Gehäuse mit Lastträger auf. In einem der beiden Gehäuse werden die Meßdaten der beiden Auswägeeinrichtungen über eine Auswerteeinheit verarbeitet und das aus den beiden Komponenten ermittelte Gesamtgewicht angezeigt.

Nachteilig ist bei dieser Lösung, daß zwei komplette Auswägeeinrichtungen mit je einem Gehäuse und einem Lastträger erforderlich sind. Außerdem sind im zusammengeklappten Zustand der Waage deren empfindliche Teile, insbesondere die Auswägevorrichtungen, nicht gegen Stöße und Überlastung geschützt.

Der Erfindung liegt die Aufgabe zugrunde, eine Waage für den mobilen Einsatz vorzuschlagen, die einen einfachen Aufbau erlaubt, jedoch die empfindlichen Teile der Waage beim Transport gegen Überlastung und Stöße sichert.

Diese Aufgabe wird erfindungsgemäß durch eine elektronische Waage mit einer einen Meßkörper umfassenden Auswägeeinrichtung, wobei der Meßkörper ein Krafteinleitungsteil und ein Basisteil umfaßt, mit einem an dem Meßkörper gehaltenen Trägerelement, mit einem Lastträger, welcher mit dem Krafteinleitungsteil des Meßkörpers verbunden ist, sowie mit mindestens zwei an dem Trägerelement verschwenkbar gehaltenen Gehäuseteilen, welche in einer Transportstellung die Auswägeeinrichtung samt Meßkörper schützend umgeben, so daß keine Kräfte in den Meßkörper einleitbar sind, und zum Betrieb der Waage in eine Betriebsstellung verschwenkbar sind, in der der Lastträger frei zugänglich ist und Kräfte in den Meßkörper einleitbar sind, gelöst.

Mit dem Verschwenken der Gehäuseteile in die Transportstellung, kurz dem Zusammenklappen der Waage werden die Außenabmessungen der Waage erheblich verkleinert. Dadurch läßt sich die Waage vorteilhafterweise auf kleinstem Raum unterbringen. Außerdem läßt sich die empfindliche Auswägeeinrichtung durch die zusammengeklappten Gehäuseteile allseitig umhüllen und schützen.

In dieser Stellung können Druckkräfte die Auswägeeinrichtung nicht mehr schädigen, weil die nun ein schützendes Gehäuse bildenden Gehäuseteile alle Druckkräfte aufnehmen und nicht mehr an den Meßkörper weiterleiten.

Bei einer ersten Ausführungsform der Erfindung sind die verschwenkbaren Gehäuseteile über das Trägerelement mit dem Basisteil des Meßkörpers verbunden. Im zusammengeklappten Zustand umschließen die Gehäuseteile die Auswägeeinrichtung samt Meßkörper und den Lastträger, so daß keine Kräfte auf den Krafteinleitungsteil des Meßkörpers wirken können. In der Betriebsstellung der Waage sind die Gehäuseteile auseinandergeklappt und bilden die Standfläche der Waage. Der Lastträger ist jetzt frei zugänglich und kann Gewichtskräfte auf den Krafteinleitungsteil der Waage bringen. Der Lastträger kann ebenfalls zusammenklappbar ausgebildet sein.

Bei einer zweiten Ausführungsform der Erfindung sind die verschwenkbaren Gehäuseteile über das Trägerelement mit dem Krafteinleitungsteil des Meßkörpers verbunden. Im zusammengeklappten Zustand verhindern sie, daß Kräfte auf das Basisteil des Meßkörpers wirken können, so daß der Meßkörper wiederum vor Überlastung und Stößen gesichert ist. Gleichzeitig können die Gehäuseteile den Lastträger bilden.

Bei einer Abwandlung der zweiten Ausführungsform bildet neben den verschwenkbaren Gehäuseteilen zusätzlich das Trägerelement den Lastträger aus. Das Trägerelement bildet dabei mit einem Abschnitt ein Lastträgermittelteil, und die Gehäuseteile sind beidseits des Mittelteils angelenkte Lastplattenschwenkteile.

Die vorteilhafte Bauform mit den zu einem Schutzgehäuse zusammenklappbaren Gehäuseteilen eignet sich für alle bekannten mit einem biegeelastisch verformbaren Meßkörper arbeitenden Wägeprinzipien, wie Dehnmeßstreifen-(DMS), kapazitive, induktive, Schwingsaiten- und elektromagnetische Kraftkompensations-Wägezelle.

Besonders vorteilhaft ist die Verwendung einer DMS-Wägezelle, die eine sehr kompakte Bauweise von Meßkörper, DMS-Sensor und Auswerteelektronik ermöglicht und weitgehend stoßunempfindlich ist.

Die Auswägeeinrichtung mit Meßkörper, Auswägeelektronik, Gewichtsanzeige und Stromversorgung läßt sich im Bereich des Lastträgermittelteils komplett unterbringen und kann durch umlaufende Versteifungsrippen am Mittelteil zusätzlich geschützt werden. Alle notwendigen elektrischen Kabelverbindungen können ebenfalls innerhalb dieses geschützten Mittelteils untergebracht werden und ermöglichen so mit einfachen Mitteln einen hohen Schutz gegen einwirkende elektromagnetische Störstrahlungen.

Lastträgermittelteil und Lastträgerschwenkteile sind kostengünstig aus umgeformtem Metallblech herstellbar und weisen mit ihren bevorzugt an der Außenkontur nach unten abgebogenen Schenkeln auch die notwendige Steifigkeit auf.

Die Umrüstung der Waage von ihrer zusammengeklappten Transportstellung in die Betriebsstellung und umgekehrt läßt sich bevorzugt durch das Lösen einer Transportsicherung bzw. Entriegeln aus der Betriebsstellung mit wenigen einfachen Handgriffen erreichen.

Die Standfestigkeit der Waage wird vorteilhaft durch Fußhebel erreicht, die in der Betriebsstellung der Waage um einen Fußhebel-Drehpunkt auseinandergeschwenkt werden, so daß sich eine stabile Dreipunkt- bzw. Vierpunktauflage ergibt. Eine in senkrechter Richtung wirkende Federkraft im Fußhebel-Drehpunkt sorgt für Spielfreiheit der Schwenklagerung und verhindert eine unbeabsichtigte Verstellung der Fußhebel. Es kann vorgesehen sein, daß die Fußhebel wenigstens in ihrer Betriebsstellung verrasten. Dies kann bei der Transportstellung unterbleiben, da sie von den zusammengeklappten Gehäuseteilen umgeben werden und so in ihrer Transportstellung gehalten werden.

Für den mobilen Einsatz der Waage ist es außerdem vorteilhaft, vom Stromnetz unabhängig arbeiten zu können. Dies wird bei der Erfindung durch Verwendung von stromsparenden Elementen für die Auswerteelektronik und Anzeige erreicht, in Verbindung mit einer integrierten eigenständigen Stromversorgung mittels Batterien bzw. Akkus. Mit der zusätzlichen Anordnung von Solarzellen auf der oberen Fläche des Lastträgermittelteils wird eine völlig autarke Stromversorgung erreicht.

Diese und weitere vorteilhafte Ausgestaltungen sind Gegenstand der Unteransprüche und werden im folgenden anhand der Zeichnung noch näher erläutert. Dabei zeigen:
- Fig. 1: eine Vorderansicht einer erfindungsgemäßen Waage, wobei die Seite links der Symmetrieachse den Betriebszustand der Waage und die rechte Seite den zusammenklappten Transportzustand der Waage darstellt;
- Fig. 2: eine Draufsicht mit Darstellung der Waage aus Fig. 1 im Betriebszustand;
- Fig. 3: eine Schnittansicht der Waage längs A-A in Fig. 2;
- Fig. 4: eine Schnittansicht entsprechend Fig. 3 in einem abgewandelten weiteren Ausführungsbeispiel;
- Fig. 5: einen Teilschnitt B-B des weiteren Ausführungsbeispiels aus Fig. 4.

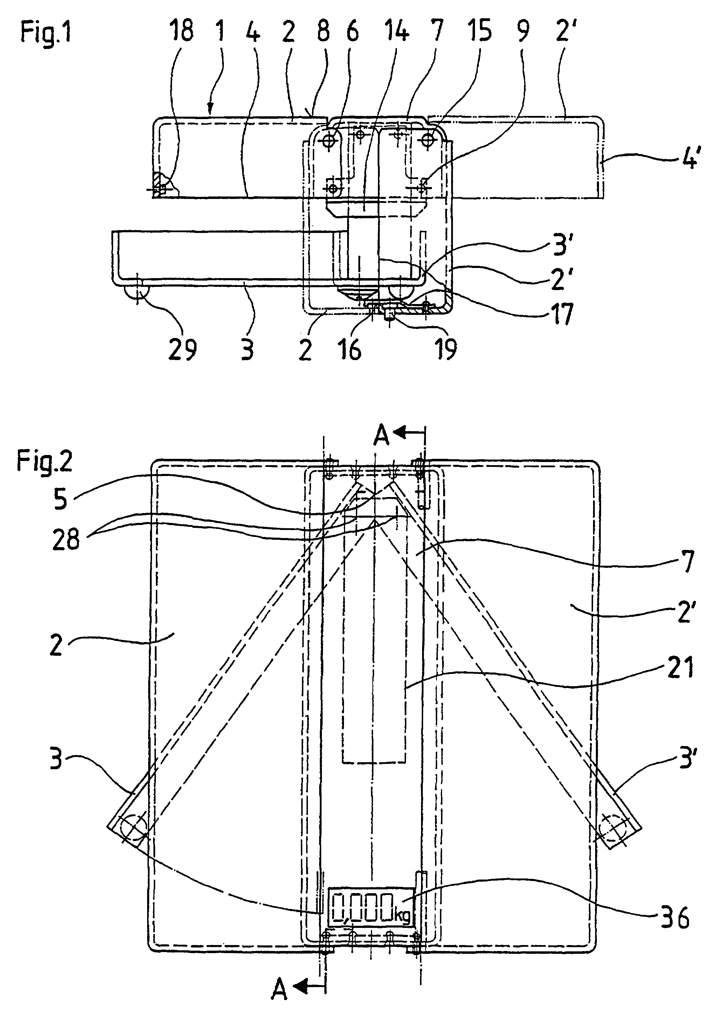

Ein erstes Ausführungsbeispiel (entspricht der zuvor beschriebenen zweiten Ausführungsform) der Waage ist in den Figuren 1 bis 3 dargestellt.

Figur 1 zeigt die beiden möglichen Stellungen der symmetrischen Waage 1. Links der Symmetrieachse ist die Waage 1 in der Betriebsstellung durchgezogen gezeichnet, mit waagerecht stehendem linkem Lastträgerschwenkteil (Gehäuseteil) 2 und ausgeschwenktem linkem Fußhebel 3, während auf der rechten Seite die Waage 1 in der zusammengeklappten Transportstellung dargestellt ist, mit eingeschwenktem Fußhebel 3' und heruntergeklapptem Lastträgerschwenkteil (Gehäuseteil) 2'.

Die beiden Lastträgerschwenkteile 2 und 2', die zur Versteifung nach unten abgebogene Versteifungsränder 4 bzw. 4' aufweisen, sind über je ein Scharnier 6 mit einem Lastträgermittelteil 7 schwenkbar verbunden und bilden in der Betriebsstellung der Waage zusammen damit eine waagerechte und ebene Aufnahmefläche 8 für das Wägegut.

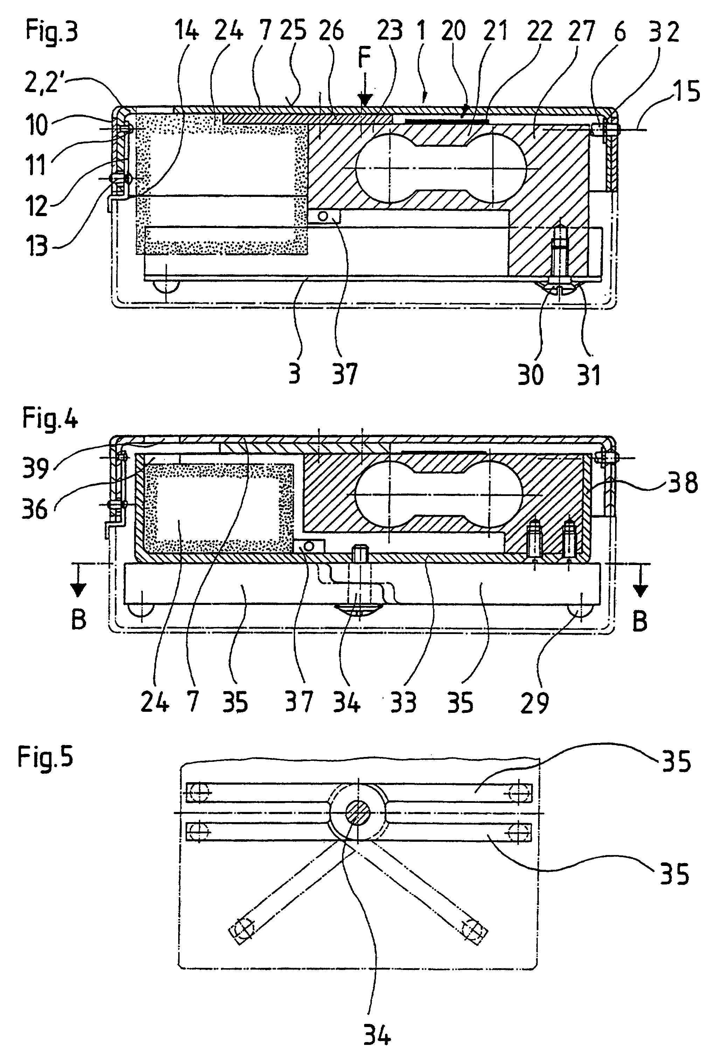

Das Lastträgermittelteil 7 weist an seinen Längskanten, bevorzugt an allen Außenkanten, Versteifungsrippen 10 auf. Diese Versteifungsrippen können vorteilhafterweise die der Scharnierlagerung dienenden durchgehenden Scharnierachsen 15 aufnehmen, welche mittels Sicherungsscheiben 32 (vgl. Fig. 3) gesichert werden.

Die Lastträgerschwenkteile 2 und 2' weisen jeweils an den beidseitig abgebogenen Versteifungsrändern 4 und 4' Rastbohrungen 9 auf. Diese sind in der Betriebsstellung der Waage in am Lastträgermittelteil 7 auf zwei gegenüberliegenden Seiten der umlaufenden Versteifungsrippen 10 über Niete 11 fest angebrachte, federnde Rastplatten 12 mit Rastbolzen 13 eingerastet.

Eine der beiden Rastplatten 12 ist in Fig. 3 in der eingerasteten Position dargestellt, wobei jeweils zwei fest mit der Rastplatte 12 verbundene Rastbolzen 13 die Lastträgerschwenkteile 2 und 2' fixieren.

Ein unter den Versteifungsrippen 10 des Lastträgermittelteils 7 herausragender Teil der Rastplatte 12 ist als Druckfläche 14 abgekröpft. Zur Entriegelung der beiden Lastträgerschwenkteile 2 und 2' werden nun beidseitig die Druckflächen 14 der federnden Rastplatten 12 zurückgedrückt, so daß die Rastbolzen 13 außer Eingriff der Rastbohrungen 9 kommen.

Nun werden die beiden Lastträgerschwenkteile 2 und 2' um die zwei parallel zur Aufnahmefläche 8 der Waage liegende Scharnierachsen 15 so lange nach unten geschwenkt, bis sich deren abgebogene Versteifungsränder 4 und 4' berühren. Damit sind die Lastträgerschwenkteile 2 und 2' in der Transportstellung der Waage 1 und bilden nun zusammen mit dem Lastträgermittelteil 7 ein allseitig geschlossenes Gehäuse, welches auch die Fußhebel 3 und 3' mit umschließt. Die Rastbolzen 13 liegen mit der den Rastplatten 12 innewohnenden Federkraft auf den Innenflächen der Versteifungsränder 4 und 4' an.

Die Versteifungsränder 4 und 4' können in der geschlossenen Transportstellung deckungsgleich mit den Rastbolzen 13 Vertiefungen aufweisen, in welche die Rastbolzen 13 leicht eintauchen und dabei eine kraftschlüssige Transportsicherung der beiden Lastträgerschwenkteile 2 und 2' in der zusammengeklappten Stellung bilden. Vorzugsweise wird jedoch eine in Fig. 1 dargestellte formschlüssig wirkende Transportsicherung 16 verwendet. Dazu ist beispielsweise ein Federriegel 17 am Versteifungsrand 4' des Lastträgerschwenkteils 2' befestigt, der das am anderen Lastträgerschwenkteil 2 befestigte Rastteil 18 formschlüssig umgreift. Zum Öffnen des Gehäuses und Zurückschwenken der Lastträgerschwenkteile 2 und 2' in die Betriebsstellung der Waage wird ein Entriegelungsbolzen 19 betätigt, der den Federriegel 17 wieder vom Rastteil 18 löst.

Fig. 3 zeigt die Befestigung einer Auswägeeinrichtung 20 unter der einen Teil der Wägegut-Aufnahmefläche 8 bildenden oberen Fläche 25 des Lastträgermittelteils 7. Die im Ausführungsbeispiel gezeigte und an sich bekannte Auswägeeinrichtung 20 besteht aus einem biegeelastisch verformbaren Meßkörper 21, einer Sensoranordnung 22 mit Dehnmeßstreifen(DMS) zur Umwandlung der durch die auf den Krafteinleitungsteil 23 des Meßkörpers 21 wirkende Gewichtskraft F hervorgerufenen Verformung in ein elektrisches Wägesignal und einer Auswerteelektronik 24 zur Aufbereitung des Gewichtswertes und anschließenden Gewichtsanzeige.

Die erfindungsgemäße Waage ist aber nicht auf eine Auswägeeinrichtung nach dem DMS-Wägeprinzip beschränkt, sondern auch mit anderen bekannten mit einem biegeelastischen Meßkörper arbeitenden Wägeprinzipien wie kapazitiven, induktuiven, Schwingsaiten- oder elektromagnetischen Kraftkompensations-Wägezellen anwendbar.

Ein Krafteinleitungsteil 23 des Meßkörpers 21 ist über ein Distanzstück 26 fest mit dem Lastenträgermittelteil 7 verbunden. Das Distanzstück 26 ist vorzugsweise so gestaltet, daß es gleichzeitig ein Schutzgehäuse für die strichpunktiert und gepunktet angedeutete Auswerteelektronik 24 bildet und die Steifigkeit des Lastrrägermittelteils 7 noch erhöht.

An einem Basisteil 27 des Meßkörpers 21 sind die zwei waagerecht verschwenkbaren Fußhebel 3 und 3' gelagert, die in der Betriebsstellung der Waage nach außen geschwenkt werden, wie in Fig. 2 dargestellt. Auf der Schwenkseite der Fußhebel 3 und 3' sind Aufstellfüße 29 befestigt. Auf der gegenüberliegenden FuBhebelseite, jenseits des Drehpunktes 28 bilden die Fußhebelenden in der Betriebsstellung einen Festanschlag 5.

In der Transportstellung der Waage 1 liegen die Fußhebel 3 und 3' im wesentlichen parallel zur Längsseite des Meßkörpers 21 und werden dabei von den Lastträgerschwenkteilen 2 und 2' umhüllt.

Die beiden Fußhebel 3 und 3' können entweder einen gemeinsamen Drehpunkt 28 oder, wie im Ausführungsbeispiel in Fig. 1 und 2 dargestellt, zwei unmittelbar nebeneinanderliegende Drehpunkte 28 aufweisen.

Der bzw. die Drehpunkt(e) 28 bilden in der Betriebsstellung der Waage zusammen mit den beiden Aufstellfüßen 29 eine stabile Dreipunktauflage. Die Fußhebel 3 und 3' sind mittels Ansatzschrauben 30 im Drehpunkt 28 am Basisteil 27 des Meßkörpers 21 drehbar gelagert. Eine zusätzliche Tellerfeder 31, die in der Ansatzschraube 30 zentriert ist, übt senkrecht zur Schwenkrichtung der Fußhebel 3 und 3' eine Kraft aus, die größer ist als die zulässige Maximallast der Waage. Dadurch wird erreicht, daß die Fußhebellagerung in senkrechter Richtung kein Spiel aufweist. Außerdem wird verhindert, daß sich die Fußhebel 3 und 3' unbeabsichtigt aus ihrer Betriebsstellung oder Transportstellung verstellen können.

Der von der Auswerteelektronik 24 aufbereitete Gewichtswert wird in einer Gewichtsanzeige 36 angezeigt, welche vorzugsweise innerhalb der Waage 1 in der Nähe des Außenrandes der Wägegut-Aufnahmefläche 8 im Lastträgermittelteil 7 angeordnet ist. Diese Lösung ist kostengünstig realisierbar und bietet in Verbindung mit der zusätzlichen Ausgestaltung des Distanzstücks 26 als Schutzgehäuse auch einen hervorragenden Schutz gegen einwirkende elektromagnetische Störstrahlung.

Alternativ ist aber auch eine Plazierung der Gewichtsanzeige 36 außerhalb der Waage 1 möglich, beispielsweise unter Verwendung eines zusätzlichen Verbindungskabels zur Auswerteelektronik 24.

Als weitere Lösungsvariante kann die Gewichtsanzeige 36 auch im unteren Bereich der Auswerteeinheit 24 in einer Art Schubladenführung plaziert sein und in der Betriebsstellung der Waage 1 über deren Peripherie herausgezogen werden.

Die Stromversorgung der Waage 1 wird über Batterien bzw. wiederaufladbare Akkus vorgenommen. Diese sind benachbart zur Auswerteelektronik 24 so angeordnet, daß sie in der Betriebsstellung der Waage von außen leicht zugänglich und austauschbar sind.

Durch eine zusätzliche Anordnung von Solarzellen z. B. auf der oberen Fläche 25 des Lastträgermittelteils 7 läßt sich eine völlig autarke Stromversorgung erzielen. Die Batterien oder Akkus können gegebenenfalls entfallen.

Zum Ein-/Ausschalten der Waage ist ein Mikroschalter (Ein/Ausschalter) 37 vorgesehen. Dieser ist so am Meßkörper-Krafteinleitungsteil 23 befestigt, daß er in der Transportstellung der Waage z. B. durch ein Lastträgerschwenkteil 2 oder 2' betätigt wird und in dieser Position die Stromversorgung unterbricht. Mit dem Ausschwenken der Lastträgerschwenkteile 2 bzw. 2' in die Betriebsstellung der Waage wird gleichzeitig die Stromversorgung freigegeben.

Fig. 4 und 5 zeigen ein zweites Ausführungsbeispiel der Waage 1. Es unterscheidet sich von dem ersten Ausführungsbeispiel dadurch, daß an der Unterseite des Meßkörper-Basisteils 27 ein steifer, vorzugsweise wannenförmiger Träger 33 befestigt ist, der etwa mittig zur Waage eine Lagerung 34 für zwei DoppelfuBhebel 35 aufweist.

Die beiden Doppelfußhebel 35 liegen in der Transportstellung der Waage 1 im wesentlichen parallel zur Längsseite des Meßkörpers 21 und werden dabei von den Lastträgerschwenkteilen 2 und 2' umhüllt.

In der Betriebsstellung der Waage 1 werden die Doppelfußhebel 35 nach außen verschwenkt und die an den Hebelenden angebrachten Aufstellfüße 29 bilden eine Vierpunktauflage.

Im Innenraum des wannenförmigen Trägers 33 sind, geschützt durch dessen Seitenwände 38, die Auswerteelektronik 24 mit Gewichtsanzeige 36 und Mikroschalter 37 fest angeordnet. Die Seitenwände 38 und die Auswerteelektronik 24 mit Gewichtsanzeige 36 weisen zu dem beweglichen Teil der Auswägeeinrichtung 20, bestehend aus Krafteinleitungsteil 23, Distanzstück 26 und Lastträgermittelteil 7, einen gewissen Sicherheitsabstand auf, um das Wägeergebnis nicht zu verfälschen. Die Gewichtsanzeige 36 ist deckungsgleich mit einem im Lastträgermittelteil 7 angebrachten transparenten Anzeigefenster 39 plaziert und durch dieses hindurch ablesbar. Somit lassen sich bei dieser zweiten Ausführungsform alle elektrischen Teile der Waage 1 mit Kabelverbindungen und Stromversorgung innerhalb des wannenförmigen Trägers 33 geschützt unterbringen, wobei das haubenförmige Lastträgermittelteil 7 die obere Abdeckung bildet.

Die elektronische Waage 1 mit Gewichtsanzeige 36 läßt sich mit einfachen Mitteln auch zu einer preisrechnenden Waage ausbauen, beispielsweise indem eine zusätzliche Schnittstelle zur Ausgabe des Gewichtswertes vorgesehen wird. Ein angeschlossenes Peripheriegerät, z. B. ein handelsüblicher Notebook-, Palmtop-Taschen- oder PC-Rechner oder ein ähnlicher, preisgünstiger Taschenrechner mit Schnittstellenanschluß führt im einfachsten Fall die Multiplikation "kg-Preis x Gewicht = Preis" einschließlich Anzeige aus. Diese Lösung ist über den Rechner beliebig ausbaubar, z. B. mit Artikeldatenspeicher, Bon-/Etikettendrucker, Geräteverbundsystem usw.

Ebenfalls denkbar ist, daß in dem Lastträgermittelteil eine schubladenartig ausfahrbare oder ausklappbare Tastatur untergebracht wird, wobei dann die Gewichtsanzeige 36 um eine Anzeigemöglichkeit für den Preis ergänzt werden kann.

## Patentansprüche

1. Elektronische Waage (1) mit einer einen Meßkörper (21) umfassenden Auswägeeinrichtung (20), wobei der Meßkörper (21) ein Krafteinleitungsteil (23) und ein Basisteil (27) umfaßt, mit einem an dem Meßkörper (21) gehaltenen Lastträgermittelteil (7), welches mit dem Krafteinleitungsteil (23) des Meßkörpers (21) verbunden ist, sowie mit mindestens zwei an dem Lastträgermittelteil (7) verschwenkbar gehaltenen Gehäuseteilen (2, 2'), welche in einer Transportstellung die Auswägeeinrichtung (20) samt Meßkörper (21) schützend umgeben, so daß keine Kräfte in den Meßkörper (21) einleitbar sind, und zum Betrieb der Waage (1) in eine Betriebsstellung verschwenkbar sind, in der der Lastträger frei zugänglich ist und Kräfte in den Meßkörper (21) einleitbar sind.

2. Waage nach Anspruch 1, **dadurch gekennzeichnet, daß** die verschwenkbaren Gehäuseteile mit dem Basisteil (27) des Meßkörpers (21) verbunden sind und in der Betriebsstellung der Waage (1) die Standfläche der Waage (1) bilden.

3. Waage nach Anspruch 1, **dadurch gekennzeichnet, daß** die verschwenkbaren Gehäuseteile (2, 2') mit dem Krafteinleitungsteil (23) des Meßkörpers (21) verbunden sind und in der Betriebsstellung den Lastträger bilden.

4. Waage nach Anspruch 1, **dadurch gekennzeichnet, daß** das Trägerelement mit dem Krafteinleitungsteil (27) des Meßkörpers (21) verbunden ist und einen Abschnitt aufweist, der ein Lastträgermittelteil (7) bildet, und daß die verschwenkbaren Gehäuseteile Lastplattenschwenkteile (2, 2') bilden, welche in der Betriebsstellung zusammen mit dem Lastträgermittelteil (7) den Lastträger bilden.

5. Waage nach einem der Ansprüche 1 bis 4, **dadurch gekennzeichnet, daß** der Meßkörper (21) der Auswägeeinrichtung (20) ein biegeelastisch verformbarer Meßkörper (21) ist und daß die Auswägeeinrichtung (20) eine Sensoranordnung (22) zur Umwandlung der von der auf den Krafteinleitungsteil (23) des Meßköpers (21) wirkenden Gewichtskraft (F) hervorgerufenen Verformung in ein elektrisches Wägesignal und eine Auswerteelektronik (24) zur Aufbereitung eines Gewichtswerts aus dem Wägesignal umfaßt.

6. Waage nach Anspruch 5, **dadurch gekennzeichnet, daß** die Sensoranordnung (22) ein Dehnmeßstreifensensor ist, der die durch die auf den Meßkörper (21) wirkende Gewichtskraft (F) erzeugte Verformung des Meßkörpers (21) in eine ohmsche Widerstandsänderung umsetzt, welche von der Auswerteelektronik (24) zu einem anzeigbaren und eichfähigen Gewichtswert weiterverarbeitet wird.

7. Waage nach einem der Ansprüche 4 bis 6, **dadurch gekennzeichnet, daß** in der Betriebsstellung der Waage (1) die obere Fläche (25) des Lastträgermittelteils (7) zusammen mit den beiden Lastträgerschwenkteilen (2, 2') eine im wesentlichen ebene Wägegut-Aufnahmefläche (8) bilden.

8. Waage nach einem der Ansprüche 4 bis 7, **dadurch gekennzeichnet, daß** die obere Fläche (25) des Lastträgermittelteils (7) an seinen Außenkanten nach unten abstehende Versteifungsrippen (10) aufweist, an denen Scharniere (6) für die schwenkbare Lagerung der Lastträgerschwenkteile (2, 2') angeordnet sind.

9. Waage nach Anspruch 8, **dadurch gekennzeichnet, daß** an zwei sich gegenüberliegenden Versteifungsrippen (10) des Lastträgermittelteils (7) je eine federnde Rastplatte (12) mit zwei Rastbolzen (13) befestigt ist, die beim Verschwenken der Lastträgerschwenkteile (2, 2') in die Betriebsstellung der Waage (1) in an abgebogenen Versteifungsrändern (4, 4') der Lastträgerschwenkteile (2, 2') angeordnete Rastbohrungen (9) einrasten.

10. Waage nach Anspruch 9, **dadurch gekennzeichnet, daß** die Rastplatten (12) mit einem freien, federnden Schenkel in der Betriebsstellung der Waage (1) unter den Versteifungsrippen (10) des Lastträgermittelteils (7) hervorragen und eine Druckfläche (14) zur Entriegelung der Lastplattenschwenkteile (2, 2') bilden.

11. Waage nach einem der Ansprüche 1 bis 10, **dadurch gekennzeichnet, daß** die Waage eine Transportsicherung aufweist, welche die beiden Gehäuseschwenkteile (2, 2') in der für den Transport der Waage (1) vorgesehenen, zusammengeklappten Transportstellung sichert.

12. Waage nach einem der Ansprüche 4 bis 11, **dadurch gekennzeichnet, daß** die Auswerteelektronik (24) unter der oberen Fläche (25) des Lastträgermittelteils (7) benachbart zum Krafteinleitungsteil (23) des Meßkörpers (21) gehalten ist.

13. Waage nach einem der Ansprüche 1 bis 12, **dadurch gekennzeichnet, daß** an dem Basisteil (27) des Meßkörpers (21) zwei Fußhebel (3, 3') verschwenkbar gelagert sind, die an ihrem von ihrem Drehpunkt entfernten freien Ende jeweils einen Aufstellfuß (29) aufweisen, wobei die Fußhebel (3, 3') in einer Transportstellung im wesentlichen parallel zueinander angeordnet sind und in eine Betriebsstellung ausschwenkbar sind, so daß die Aufstellfüße (29) und ein benachbart zum Drehpunkt der Fußhebel (3, 3') vorgesehener weiterer Aufstellfuß eine stabile Dreipunktauflage für die Waage (1) bilden.

14. Waage nach Anspruch 13, **dadurch gekennzeichnet, daß** die Fußhebel (3, 3') über eine Ansatzschraube (30) am Basisteil (27) des Meßkörpers spielfrei gelagert sind und daß eine Tellerfeder (31) auf die Fußhebel (3, 3') senkrecht zu deren Schwenkebene eine Kraft ausübt, die größer ist als die zulässige Maximallast der Waage (1).

15. Waage nach Anspruch 13 oder 14, **dadurch gekennzeichnet, daß** die Fußhebel (3, 3') mit je einem direkt nebeneinander liegenden Drehpunkt (28) am Basisteil (27) des Meßkörpers (21) gelagert sind.

16. Waage nach einem der Ansprüche 13 bis 15, **dadurch gekennzeichnet, daß** an der Unterseite des Meßkörperbasisteils (27) ein Träger (33) befestigt ist, welcher etwa mittig zur Waage (1) eine Lagerung für zwei Doppelfußhebel (35) aufweist.

17. Waage nach einem der Ansprüche 1 bis 16, **dadurch gekennzeichnet, daß** eine Gewichtsanzeige (36) innerhalb des Lastträgers der Waage (1) benachbart zu dessen Außenkontur, vorzugsweise im Lastträgermittelteil (7) angeordnet ist.

18. Waage nach einem der Ansprüche 1 bis 16, **dadurch gekennzeichnet, daß** eine Gewichtsanzeige (36) der Auswerteelektronik (24) schubladenartig ausziehbar gelagert ist und in der Betriebsstellung der Waage (1) in der ausgezogenen Stellung über die Außenkontur des Lastträgers hinausragt.

19. Waage nach einem der Ansprüche 1 bis 18, **dadurch gekennzeichnet, daß** deren Stromversorgung mittels einer Batterie oder eines Akkus vorgenommen wird, die bzw. der benachbart zur Auswägeeinrichtung (20) angeordnet ist.

20. Waage nach einem der Ansprüche 4 bis 19, **dadurch gekennzeichnet, daß** auf der oberen Fläche (25) des Lastträgermittelteils (7) Solarzellen angeordnet sind, welche der Stromversorgung der Auswägeeinrichtung (20) dienen.

21. Waage nach einem der Ansprüche 1 bis 20, **dadurch gekennzeichnet, daß** ein Ein-/Ausschalter (37) vorhanden ist, welcher beim Zusammenklappen der Waage (1) in die Transportstellung die Stromversorgung der Auswägeeinrichtung (20) unterbricht.

22. Waage nach einem der Ansprüche 1 bis 21, **dadurch gekennzeichnet, daß** die Auswägeeinrichtung (20) eine Schnittstelle zum Anschluß eines Peripheriegeräts umfaßt.

23. Waage nach einem der Ansprüche 1 bis 22, **dadurch gekennzeichnet, daß** die Auswerteelektronik (24) der Auswägeeinrichtung (20) einschließlich der Gewichtsanzeige (36) und dem Ein-/Ausschalter (37) mit dem Basisteil (27) des Meßkörpers (21) fest verbunden ist.

24. Waage nach einem der Ansprüche 1 bis 22, **dadurch gekennzeichnet, daß** die Auswerteelektronik (24) einschließlich der Gewichtsanzeige (36) und dem Ein-/Ausschalter (37) mit dem Krafteinleitungsteil (23) des Meßkörpers (21) fest verbunden ist.

## Claims

1. Electronic scales (1) with a weighing device (20) comprising a measuring body (21), wherein the measuring body (21) comprises a force transmission part (23) and a base part (27), with a central load-bearing part (7) retained on the measuring body (21) and is connected to the force transmission part (23) of the measuring body (21), and also with at least two housing parts (2, 2') swivellably retained on the central load-bearing part (7), which in a transport position protectively surround the weighing device (20) together with the measuring body (21) so that no forces can be transmitted into the measuring body (21), and for the operation of the scales (1) can be swivelled into an operating position in which the load-bearing device is freely accessible and forces can be transmitted into the measuring body (21).

2. Scales according to Claim 1,
**characterised in that** the swivelling housing parts are connected to the base part (27) of the measuring body (21) and in the operating position of the scales (1) form the standing surface of the scales (1).

3. Scales according to Claim 1,
**characterised in that** the swivellable housing parts (2, 2') are connected to the force transmission part (23) of the measuring body (21) and in the operating position form the load-bearing device.

4. Scales according to Claim 1,
**characterised in that** the support component is connected to the force transmission part (27) of the measuring body (21) and comprises a portion which forms a central load-bearing part (7),
**and in that** the swivellable housing parts form load plate swivel parts (2, 2'), which in the operating position together with the central load-bearing part (7) form the load-bearing device.

5. Scales according to one of Claims 1 to 4,
**characterised in that** the measuring body (21) of the weighing device (20) is a flexibly deformable measuring body (21)
**and in that** the weighing device (20) comprises a sensor arrangement (22) for the conversion of the deformation caused by the weight (F) acting on the force transmission part (23) of the measuring body (21) into an electrical weighing signal and evaluation electronics (24) for processing a weight value from the weighing signal.

6. Scales according to Claim 5,
**characterised in that** the sensor arrangement (22) is a strain gauge sensor, which converts the deformation of the measuring body (21) produced by the weight (F) acting on the measuring body (21) into a change in ohmic resistance, which is further processed by the evaluation electronics (24) to produce a weight value which can be displayed and calibrated.

7. Scales according to one of Claims 4 to 6,
**characterised in that** in the operating position of the scales (1) the upper face (25) of the central load-bearing part (7) together with the two load-bearing swivel parts (2, 2') form a substantially plane supporting surface (8) for the item to be weighed.

8. Scales according to one of Claims 4 to 7,
**characterised in that** the upper face (25) of the central load-bearing part (7) comprises downwardly extending reinforcing ribs (10) on its outer edges, at which hinges (6) for the swivelling mounting of the load-bearing swivel parts (2, 2') are disposed.

9. Scales according to Claim 8,
**characterised in that** a resilient locking plate (12) is attached to each of the two mutually opposite reinforcing ribs (10) of the central load-bearing part (7) by two locking bolts (13), which, when the load-bearing swivel parts (2, 2') swivel into the operating position of the scales (1), engage in snap-in holes (9) disposed on bent reinforcing edges (4, 4') of the load-bearing swivel parts (2, 2').

10. Scales according to Claim 9,
**characterised in that** in the operating position of the scales (1) the locking plates (12) protrude with a free resilient leg under the reinforcing ribs (10) of the central load-bearing part (7) and form a bearing surface (14) for unlocking the load plate swivel parts (2, 2').

11. Scales according to one of Claims 1 to 10,
**characterised in that** the scales comprise a transport safety device, which secures the two housing swivel parts (2, 2') in the collapsed transport position provided for the transport of the scales (1).

12. Scales according to one of Claims 4 to 11,
**characterised in that** the evaluation electronics (24) are retained under the upper face (25) of the central load-bearing part (7) adjacent to the force transmission part (23) of the measuring body (21).

13. Scales according to one of Claims 1 to 12,
**characterised in that** two foot levers (3, 3') are swivellably mounted on the base part (27) of the measuring body (21), which each comprise a mounting foot (29) at their free end remote from their fulcrum, wherein the foot levers (3, 3') are disposed substantially parallel to one another in a transport position and can be swivelled out into an operating position so that the mounting feet (29) and a further mounting foot provided adjacent to the fulcrum of the foot levers (3, 3') form a stable three-point bearing surface for the scales(1).

14. Scales according to Claim 13,
**characterised in that** the foot levers (3, 3') are mounted free from backlash via a shoulder screw (30) on the base part (27) of the measuring body
**and in that** a disk spring (31) exerts a force which is greater than the maximum permissible load of the scales (1) on the foot levers (3, 3') perpendicularly to their swivel plane.

15. Scales according to Claim 13 or 14,
**characterised in that** the foot levers (3, 3') are each mounted with a fulcrum (28) lying directly side by side on the base part (27) of the measuring body (21).

16. Scales according to one of Claims 13 to 15,
**characterised in that** a support (33), which roughly centrally in relation to the scales (1) comprises a mounting for two double foot levers (35), is attached to the underside of the base part (27) of the measuring body.

17. Scales according to one of Claims 1 to 16,
**characterised in that** a weight display (36) is disposed inside the load-bearing device of the scales (1) adjacent to its external contour, preferably in the central load-bearing part (7).

18. Scales according to one of Claims 1 to 16,
**characterised in that** a weight display (36) of the evaluation electronics (24) is mounted to pull out in the manner of a drawer and in the operating position of the scales (1) projects beyond the outer contour of the load-bearing device in the pulled-out position.

19. Scales according to one of Claims 1 to 18,
**characterised in that** their power supply is provided by means of a battery or an accumulator, which is disposed adjacent to the weighing device (20).

20. Scales according to one of Claims 4 to 19,
**characterised in that** solar cells, which serve as the power supply for the weighing device (20), are disposed on the upper face (25) of the central load-bearing part (7).

21. Scales according to one of Claims 1 to 20,
**characterised in that** an on/off switch (37) is provided, which interrupts the power supply to the weighing device (20) when the scales (1) are collapsed into the transport position.

22. Scales according to one of Claims 1 to 21,
**characterised in that** the weighing device (20) comprises an interface for the connection of a peripheral device.

23. Scales according to one of Claims 1 to 22,
**characterised in that** the evaluation electronics (24) of the weighing device (20) including the weight display (36) and the on/off switch (37) are securely connected to the base part (27) of the measuring body (21).

24. Scales according to one of Claims 1 to 22,
**characterised in that** the evaluation electronics (24) including the weight display (36) and the on/off switch (37) are securely connected to the force transmission part (23) of the measuring body (21).

## Revendications

1. Balance électronique (1) comportant un dispositif de pesée (20) comprenant un corps de mesure (21), le corps de mesure (21) comprenant une partie d'application de force (23) et une partie de base (27), et comportant une partie médiane (7) d'un support de charge supportée par le corps de mesure (21) et qui est reliée à la partie d'application de force (23) du corps de mesure (21), ainsi qu'au moins deux parties de boîtier (2, 2') retenues de manière à pouvoir pivoter sur la partie médiane (7) de support de charge et qui, dans une position de transport, entourent en les protégeant le dispositif de pesée (20) ainsi que le corps de mesure (21) de sorte qu'aucune force ne peut être appliquée au corps de mesure (21), et qui, pour le fonctionnement de la balance (1) peuvent pivoter dans une position de fonctionnement, dans laquelle le support de charge est librement accessible et peut appliquer des forces au corps de mesure (21).

2. Balance selon la revendication 1, **caractérisée en ce que** les parties pivotantes du boîtier sont reliées à la partie de base (27) du corps de mesure (21) et, lorsque la balance (1) est dans sa position de fonctionnement, forment la surface d'appui de la balance (1).

3. Balance selon la revendication 1, **caractérisée en ce que** les parties pivotantes (2, 2') du boîtier sont reliées à la partie (23) d'application de force du corps de mesure (21) et, dans la position de fonctionnement, forment le support de charge.

4. Balance selon la revendication 1, **caractérisée en ce que** l'élément de support est relié à la partie d'application de force (27) du corps de mesure (21) et possède une section qui forme une partie médiane (7) du support de charge, et que les parties pivotantes du boîtier forment des parties pivotantes (2, 2') d'un plateau de charge, qui, dans la position de fonctionnement, forment le support de charge conjointement avec la partie médiane (7) du support de charge.

5. Balance selon l'une des revendications 1 à 4, **caractérisée en ce que** le corps de mesure (21) du dispositif de pesée (20) est un corps de mesure (21) déformable avec une élasticité de flexion, et que le dispositif de pesée (20) comprend un dispositif pour convertir la déformation, provoquée par le poids (F), qui agit sur la partie d'application de force (23) du corps de mesure (21), en un signal électrique de pesée, et une unité électronique d'évaluation (24) pour indiquer un poids à partir du signal de pesée.

6. Balance selon la revendication 5, **caractérisée en ce que** le dispositif formant capteur (29) est un capteur à jauge extensométrique, qui convertit la déformation du corps de mesure (21) produite par le poids (F) agissant sur le corps de mesure (21), en une variation de résistance ohmique, qui est traitée ensuite par l'unité électronique d'évaluation (24) pour fournir une valeur de poids pouvant être affichée et étalonnée.

7. Balance selon l'une des revendications 4 à 6, **caractérisée en ce que** dans la position de fonctionnement, la balance (1) forme la surface supérieure (25) de la partie médiane (7) du support de charge conjointement avec les deux parties pivotantes (2, 2') du support de charge, une surface sensiblement plane (8) de réception de l'article à peser.

8. Balance selon l'une des revendications 4 à 7, **caractérisée en ce que** la surface supérieure (25) de la partie médiane (7) du support de charge possède, sur ses bords extérieurs, des nervures de renforcement (10), qui font saillie vers le bas et sur lesquelles sont disposées des charnières (6) pour le support, avec possibilité de pivotement, des parties pivotantes (2, 2') du support de charge.

9. Balance selon la revendication 8, **caractérisée en ce que** sur deux nervures de renforcement réciproquement opposées (10) de la partie médiane (7) du support de charge des plaques élastiques respectives d'encliquetage (12) sont fixées à l'aide de deux goujons d'encliquetage (13) qui, lors du pivotement des parties pivotantes (2, 2') du support de charge dans la position de fonctionnement de la balance (1), s'encliquettent dans des perçages d'encliquetage (9) qui sont disposés dans des bords de renforcement coudés (4, 4') des parties pivotantes (2, 2') du support de charge.

10. Balance selon la revendication 9, **caractérisée en ce que** les plaques d'encliquetage (12) font saillie par une branche élastique libre, au-dessous des nervures de renforcement (10) de la partie médiane (7) de support de charge, lorsque la balance (1) est dans la position de fonctionnement, et forme une surface de pression (14) pour déverrouiller les parties pivotantes (2, 2') du plateau de charge.

11. Balance selon l'une des revendications 1 à 10, **caractérisée en ce que** la balance comporte un système de sécurité pour le transport, qui bloque les deux parties pivotantes (2, 2') du boîtier dans la position de transport repliée, prévue pour le transport de la balance (1).

12. Balance selon l'une des revendications 4 à 11, **caractérisée en ce que** l'unité électronique d'évaluation (24) est retenue au-dessous de la surface supérieure (25) de la partie médiane (7) du support de charge, au voisinage de la partie d'application de force (23) du corps de mesure (21).

13. Balance selon l'une des revendications 1 à 12, **caractérisée en ce que** sur la partie de base (27) du corps de mesure (21) sont montés, de manière à pouvoir pivoter, deux leviers (3, 3'), qui comportent, au niveau de leur extrémité libre éloignée de centre de rotation, respectivement un pieds d'appui (29), les leviers formant pieds (3, 3') étant disposés d'une manière essentiellement parallèles entre eux dans une position de transport et étant déployés par pivotement dans une position de fonctionnement, de sorte que les pieds d'appui (29) et un pied d'appui supplémentaire, prévu au voisinage du centre de rotation des leviers (3, 3'), forment un appui stable en trois points pour la balance (1).

14. Balance selon la revendication 13, **caractérisé en ce que** les leviers (3, 3') sont montés sans jeu sur la partie de base (27) du corps de mesure, par l'intermédiaire de vis de fixation (30) et qu'un ressort Belleville (31) applique aux leviers (3, 3'), perpendiculairement au plan de pivotement de ces derniers, une force qui est supérieure à la charge maximale admissible de la balance (1).

15. Balance selon la revendication 13 ou 14, **caractérisée en ce que** les leviers (3, 3') sont supportés sur la partie de base (27) du corps de mesure (21) au moyen de centres respectifs de rotation (28) qui sont disposés directement côte-à-côte.

16. Balance selon l'une des revendications 13 à 15, **caractérisée en ce que** sur le côté inférieur de la partie de base (27) du corps de mesure est fixé un support (33), qui possède approximativement au centre de la balance (1) un support pour deux leviers doubles (35) pourvus de pieds.

17. Balance selon l'une des revendications 1 à 16, **caractérisée en ce qu'**une unité (36) d'affichage du poids est disposée à l'intérieur du support de charge de la balance (1) au voisinage du contour extérieur de ce support, de préférence dans la partie médiane (7) du support de charge.

18. Balance selon l'une des revendications 1 à 16, **caractérisée en ce qu'**une unité (36) d'affichage de poids de l'unité électronique d'évaluation (24) est montée de manière à pouvoir être ressortie à la manière d'un tiroir et, lorsque la balance (1) est dans la position de fonctionnement, est en saillie dans la position ressortie, au-delà du contour du support de charge.

19. Balance selon l'une des revendications 1 à 18, **caractérisé en ce que** son alimentation en courant est réalisée à l'aide d'une batterie ou d'un accumulateur, qui est disposé au voisinage du dispositif de pesée (20).

20. Balance selon l'une des revendications 4 à 19, **caractérisée en ce que** sur la surface supérieure (25) de la partie médiane (7) du support de charge sont disposées des piles solaires, qui servent à réaliser l'alimentation en courant du dispositif de pesée (20).

21. Balance selon l'une des revendications 1 à 20, **caractérisée en ce qu'**il est prévu un interrupteur marche/arrêt (37), qui lors du repliage de la balance (1) dans la position de transport, interrompt l'alimentation en courant du dispositif de pesée (20).

22. Balance selon l'une des revendications 1 à 21, **caractérisée en ce que** le dispositif de pesée (20) comprend une surface de raccordement à un appareil périphérique.

23. Balance selon l'une des revendications 1 à 22, **caractérisée en ce que** l'unité électronique d'évaluation (34) du dispositif de pesée (20) est relié de façon fixe, de même que l'unité (36) d'affichage du poids et l'interrupteur marche/arrêt (37), à la partie de base (27) du corps de mesure (21).

24. Balance selon l'une des revendications 1 à 22, **caractérisée en ce que** l'unité électronique d'évaluation (34) est reliée de façon fixe, de même que l'unité (36) d'affichage du poids et l'interrupteur marche/arrêt (37), à la partie d'application de force (23) du corps de mesure (21).
